# FASCICULE DE BREVET EUROPEEN

(11) **EP 0 939 713 B1**
(45) Date de publication et mention de la délivrance du brevet: **27.02.2002**
(21) Numéro de dépôt: 97919106.1
(22) Date de dépôt: 17.09.1997
(51) Int. Cl.: B60T 13/565, B60T 13/573

(54) **DISPOSITIF DE FREINAGE ASSISTE A RAPPORT D'ASSISTANCE VARIABLE ET HYSTERESIS REDUITE**
HILFSKRAFTBREMSVORRICHTUNG MIT VARIABLEM VERSTÄRKERVERHÄLTNIS UND VERRINGERTER HYSTERESE
POWER BRAKING DEVICE WITH VARIABLE ASSISTANCE RATIO AND REDUCED HYSTERESIS

(30) Priorité: 22.11.1996 FR 9614264
(43) Date de publication de la demande: 08.09.1999
(73) Titulaire: BOSCH SISTEMAS DE FRENADO, S.L., 08080 Barcelona 6 (ES)
(72) Inventeur: SIMON BACARDIT, Juan, F-93700 Drancy (FR)
(86) Numéro de dépôt international: FR9701631
(87) Numéro de publication internationale: WO9822319

(56) Documents cités:
- WO-A-94/07722
- WO-A-96/07572
- DE-A- 4 429 439

## Description

La présente invention concerne les dispositifs de freinage assisté pour véhicules à moteur, comprenant un maître-cylindre -commandant la pression hydraulique dans le circuit de freinage relié aux freins du véhicule, ce maître-cylindre étant susceptible d'être actionné par un servomoteur pneumatique d'assistance lorsque le conducteur du véhicule appuie sur la pédale de freinage.

De façon classique, le maître-cylindre est rempli d'un fluide de freinage et équipé d'un piston hydraulique principal destiné à recevoir une force d'actionnement se composant d'une force d'entrée et d'une force d'assistance agissant toutes deux suivant une direction axiale.

D'autre part, le servomoteur pneumatique d'assistance est susceptible d'être commandé par application de la force d'entrée sur une tige de commande contrôlant l'ouverture d'un clapet, pour exercer la force d'actionnement sur le piston hydraulique principal du maître-cylindre, le servomoteur comportant une enveloppe rigide séparée de façon étanche en deux chambres au moyen d'une cloison mobile susceptible d'être sollicitée par une différence de pression entre les deux chambres résultant de l'ouverture du clapet et d'entraîner un piston pneumatique mobile par rapport à l'enveloppe et portant le clapet, la force d'entrée étant transmise par l'intermédiaire d'un plongeur soumis d'autre part à la pression hydraulique régnant dans le maître-cylindre.

Dans ces dispositifs, le piston hydraulique principal du maître cylindre comporte lui-même un cylindre mobile creux, communiquant avec le maître-cylindre, recevant une partie au moins de la force d'assistance, et à l'intérieur duquel coulisse, de façon étanche et suivant la direction axiale, un piston de réaction susceptible de recevoir au moins la force d'entrée, des moyens élastiques exerçant une force élastique entre le piston de réaction et le cylindre mobile et sollicitant le piston de réaction en direction du maître-cylindre, au moins une ouverture étant pratiquée dans le cylindre mobile pour faire communiquer l'intérieur de ce dernier avec l'intérieur du maître-cylindre.

Un tel dispositif se trouve par exemple décrit dans le document WO 98/03385, publié après la date de dépot du présent brevet.

Ces dispositifs à réaction hydraulique présentent comme avantage principal que, quelles que soient l'intensité de l'action de freinage ou la vitesse d'application de la force d'entrée, leur courbe caractéristique de fonctionnement, à savoir la courbe donnant la pression dans le maître-cylindre en fonction de l'intensité de la force à l'entrée du servomoteur, est inchangée. Ces dispositifs ne présentent donc pas d'allongement du temps de réponse en cas de freinage d'urgence.

Ils ont toutefois comme inconvénient de présenter une hystérésis importante entre les phases d'actionnement et de relâchement, particulièrement sensible dans les actions de freinage les plus courantes, c'est à dire dépourvues de caractère d'urgence.

La présente invention se place dans ce contexte et a pour objet de proposer un dispositif de freinage assisté à réaction hydraulique, qui présente des caractéristiques de fonctionnement améliorées en cas de freinage d'urgence, qui soit dépourvu d'hystérésis, sans nécessiter de capteurs ni de circuit électronique complexe, et qui soit donc d'un coût réduit, tout en ayant un fonctionnement fiable en toutes circonstances.

Dans ce but, la présente invention propose un dispositif de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de la force d'entrée sur une tige de commande solidaire d'un plongeur contrôlant l'ouverture d'un clapet à trois voies, pour exercer la force d'actionnement sur le piston hydraulique principal, le servomoteur comportant une enveloppe rigide séparée de façon étanche en au moins deux chambres au moyen d'au moins une cloison mobile, susceptible d'être sollicitée par une différence de pression entre les deux chambres résultant de l'ouverture du clapet à trois voies et d'entraîner un piston pneumatique, mobile par rapport à l'enveloppe, portant le clapet à trois voies et contribuant au moins à transmettre la force d'assistance, le piston hydraulique principal du maître cylindre comportant lui-même un cylindre mobile, creux, communiquant avec le volume intérieur du maître-cylindre, recevant une partie au moins de la force d'assistance, et à l'intérieur duquel coulisse, de façon étanche et suivant la direction axiale, un piston de réaction susceptible de recevoir au moins la force d'entrée, des premiers moyens élastiques exerçant une première force élastique entre le piston de réaction et le cylindre mobile et sollicitant le piston de réaction en direction du maître-cylindre, au moins une ouverture étant pratiquée dans le cylindre mobile pour faire communiquer l'intérieur de ce dernier avec l'intérieur du maître-cylindre, le piston de réaction comportant un moyen de clapet à deux voies normalement ouvert, susceptible d'interrompre la communication entre le volume intérieur du maître-cylindre et l'intérieur du cylindre mobile, le piston de réaction étant composite, et comportant une première partie en butée, en position de repos, contre le cylindre mobile sous l'effet des premiers moyens élastiques, et une deuxième partie susceptible de coulisser par rapport à la première partie, des deuxièmes moyens élastiques exerçant vers l'arrière une deuxième force élastique sur la deuxième partie pour la solliciter en butée, en position de repos, contre la première partie, la deuxième partie étant susceptible de coulisser de façon étanche dans la première partie, un troisième piston étant susceptible de coulisser de façon étanche dans le cylindre mobile, le troisième piston étant sollicité vers l'arrière par des troisièmes moyens élastiques pour venir en butée, en position de repos, sur la première partie, les deuxièmes moyens élastiques étant disposés entre la deuxième partie et le troisième piston, le troisième piston étant formé avec une ouverture centrale faisant communiquer l'intérieur du cylindre mobile avec le volume intérieur du maître-cylindre, le moyen de clapet à deux voies étant formé par un siège disposé sur la deuxième partie ou sur la troisième partie.

Selon la présente invention, le troisième piston est étagé et coulisse de façon étanche dans un alésage étagé du cylindre mobile, le diamètre de la portion avant de l'alésage étagé étant inférieur au diamètre de la portion arrière de cet alésage.

Grâce à cette disposition, lors d'une action de freinage d'urgence, les première et deuxième parties du piston de réaction peuvent coulisser l'une par rapport à l'autre et actionner le moyen de clapet à deux voies dans le sens de la fermeture, de sorte que le piston de réaction ne reçoit la réaction de pression interne du maître-cylindre que sur une section inférieure à celle sur laquelle il reçoit cette réaction de pression lors d'un freinage dans des conditions normales, d'où il résulte que le rapport d'assistance du dispositif de freinage assisté est supérieur en freinage d'urgence à celui qui est obtenu pour un freinage dans des conditions normales. Lors d'une action de freinage en dehors de conditions d'urgence, le piston étagé forme un piston différentiel forçant le clapet à deux voies à l'ouverture et évitant ainsi toute hystérésis.

D'autres buts, caractéristiques et avantages de l'invention ressortiront clairement de la description qui suit d'un mode de réalisation donné à titre d'exemple nullement limitatif, en référence aux dessins annexés sur lesquels :
- La Figure 1 représente une vue en coupe d'un dispositif de freinage assisté réalisé conformément à la présente invention;
- La Figure 2 représente une vue en coupe à plus grande échelle de la partie centrale du dispositif de la Figure 1, et
- La Figure 3 représente la courbe de la pression engendrée par le maître-cylindre en fonction de l'effort appliqué à la pédale de freinage, cette courbe étant obtenue avec le dispositif de freinage assisté conforme à la présente invention.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention.

Schématiquement, un système de ce type comprend un servomoteur 100 et un maître-cylindre 200.

Le servomoteur 100, dont on n'a représenté que la partie centrale, est prévu pour être fixé de façon habituelle sur un tablier (non représenté) de séparation entre un compartiment moteur d'un véhicule et l'habitacle de ce véhicule et pour être actionné par une pédale de freinage (non représentée) située dans cet habitacle. Le maître-cylindre 200, dont on n'a représenté que la partie arrière, commande le circuit de freinage hydraulique du véhicule et est fixé sur la paroi avant du servomoteur 100

Par convention, on appelle « avant » de l'ensemble servomoteur/maître-cylindre la partie de ce dernier tournée vers le maître-cylindre 200 et « arrière » de cet ensemble la partie tournée vers la pédale de frein. Sur les Figures, l'avant est ainsi à gauche et l'arrière à droite.

Le servomoteur 100 comprend lui-même une enveloppe rigide 10 dont le volume intérieur est séparé en une chambre avant 12 et une chambre arrière 14, de façon étanche, par une cloison mobile 16 comprenant une membrane 18 et une jupe rigide 20 et susceptible d'entraîner un piston pneumatique 22 mobile à l'intérieur de l'enveloppe 10.

La chambre avant 12, dont la face avant est fermée de façon étanche par le maître-cylindre 200, est en permanence raccordée à une source de dépression (non représentée). La pression dans la chambre arrière 14 est contrôlée par une valve à trois voies 24, commandée par une tige de commande 26 reliée à la pédale de frein et solidaire d'un plongeur 28.

Lorsque la tige de commande 26 est en position de repos, c'est à dire tirée vers la droite, le clapet 24 établit une communication entre les deux chambres 12 et 14 du servomoteur. La chambre arrière 14 étant alors soumise à la même dépression que la chambre avant 12, le piston 22 est repoussé vers la droite, en position de repos, par un ressort 25 en appui sur la face interne de la paroi avant de l'enveloppe 10.

L'actionnement de la tige de commande 26 vers la gauche a pour effet, dans un premier temps, de déplacer le clapet 24 de façon qu'il isole l'une de l'autre les chambres 12 et 14 puis, dans un deuxième temps, de déplacer ce clapet de façon qu'il ouvre la chambre arrière 14 à la pression atmosphérique.

La différence de pression entre les deux chambres 12 et 14 alors ressentie par la membrane 18 exerce sur la cloison mobile 16 une poussée qui tend à la déplacer vers la gauche et à lui permettre d'entraîner le piston 22 qui se déplace à son tour en comprimant le ressort 25.

L'effort de freinage exercé sur la tige de commande 26, ou "force d'entrée" et l'effort d'assistance au freinage, ou "force d'assistance", résultant de la poussée de la cloison mobile 16, sont alors appliqués ensemble suivant l'axe X-X' du servomoteur 100 en direction du maître-cylindre 200, et se conjuguent pour constituer la force d'actionnement de ce dernier.

De façon plus précise, la force d'actionnement est appliquée sur le piston hydraulique principal 30 du maître-cylindre et en provoque le déplacement vers la gauche (sur les Figures) , ce qui entraîne une élévation de pression du liquide de freinage présent dans le volume intérieur V du maître-cylindre 200, et un actionnement du frein (non représenté) relié à ce dernier.

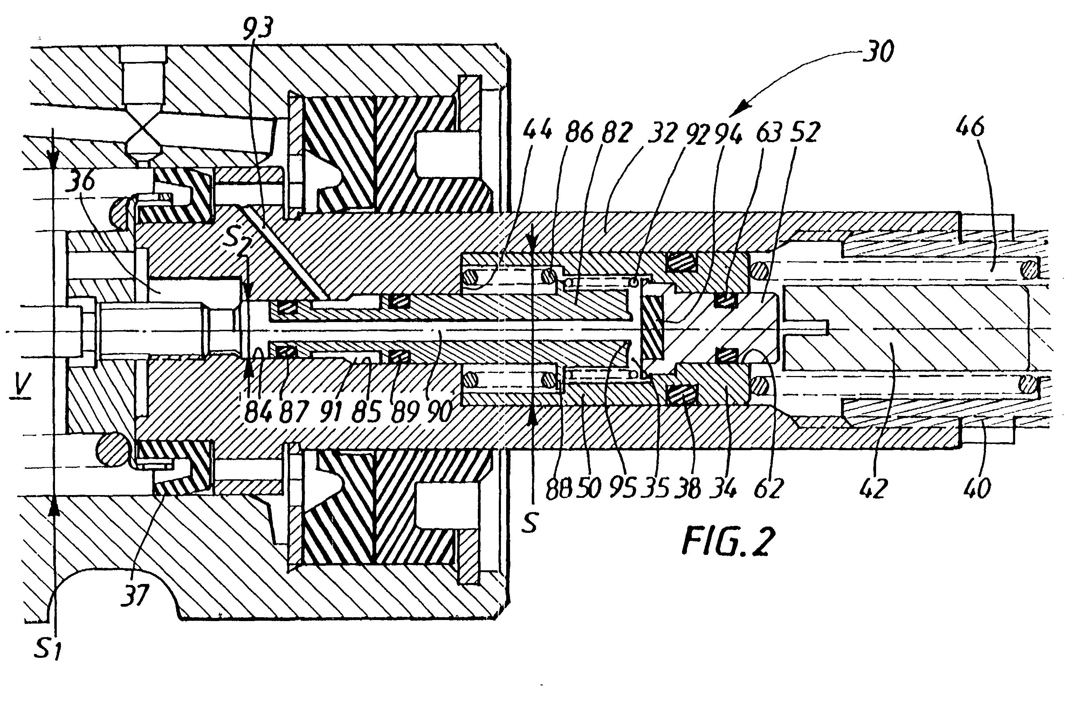

Comme on le voit mieux sur la Figure 2, le piston hydraulique principal 30 est en fait composite et comprend d'une part un cylindre 32 mobile et creux, et d'autre part un piston de réaction 34. Le volume intérieur 35 du cylindre mobile creux 32 communique avec le volume intérieur V du maître-cylindre par l'intermédiaire d'ouvertures, telles que 36, ménagées dans le cylindre mobile 32 suivant une direction axiale.

En dehors du passage de fluide que permettent ces ouvertures 36 entre le volume intérieur V du maître-cylindre 200 et le volume intérieur 35 du cylindre mobile 32, ce cylindre mobile 32 coulisse de façon étanche dans le corps du maître-cylindre 200, l'étanchéité étant obtenue grâce au moins à un joint annulaire à lèvre 37.

Le piston de réaction 34, quant à lui, coulisse à l'intérieur du cylindre mobile 32, qu'il obture de façon étanche grâce à un joint annulaire 38. Le cylindre mobile 32 est relié, par l'intermédiaire d'une bague 40, à la jupe rigide 20 de manière à recevoir une partie au moins de la force d'assistance exercée par cette jupe rigide 20.

Le piston de réaction 34 est disposé axialement, en regard d'une tige de poussée 42 solidaire du plongeur 28 et susceptible de lui transmettre au moins la force d'entrée exercée sur la tige de commande 26 elle-même solidaire du plongeur 28.

On va maintenant exposer le fonctionnement du dispositif décrit jusqu'à présent.

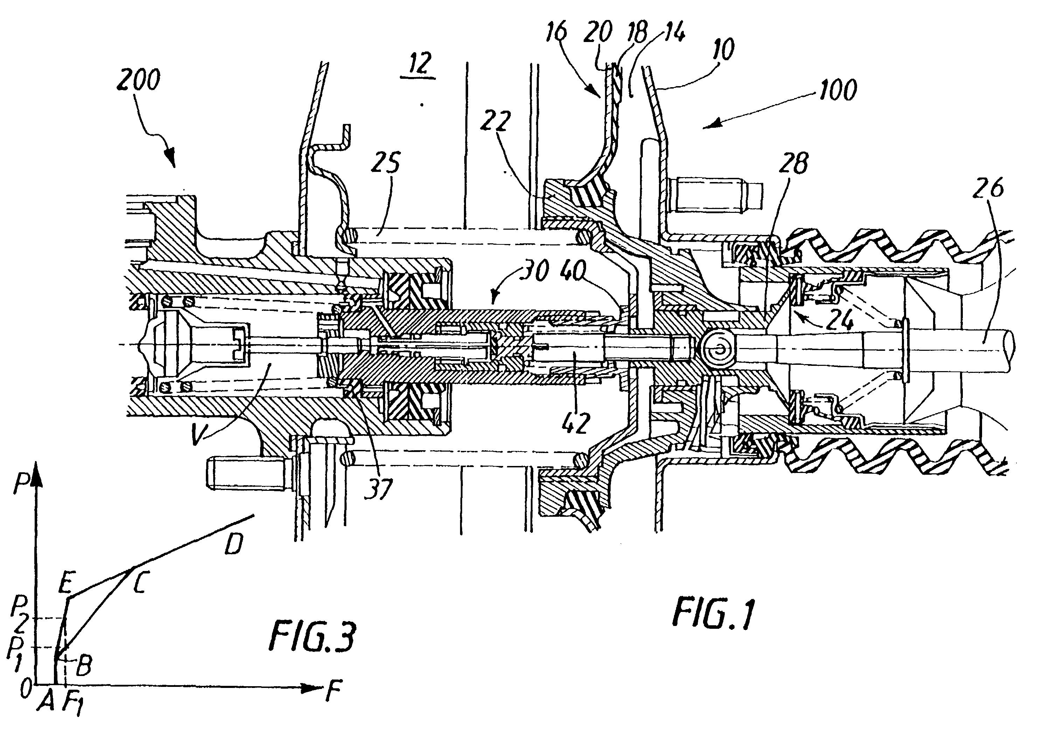

Au repos, les différentes pièces mobiles occupent la position représentée sur les Figures 1 et 2, et en particulier le piston de réaction 34 est en butée vers l'avant sur un épaulement radial 44 du cylindre mobile 32 sous l'effet de la sollicitation d'un ressort 46. Le clapet 24 autorise la communication entre les deux chambres 12 et 14, qui sont alors à la même pression réduite.

Un premier effort sur la pédale de frein sert à dépasser la précontrainte du ressort de rappel de la tige de commande 26 et à amener le clapet 24 dans une position où il isole les deux chambres 12 et 14 l'une de l'autre. Cette augmentation de l'effort sur la pédale de frein ne fournit donc aucune augmentation de pression dans le maître-cylindre, et elle est représentée sur la courbe de la Figure 3 par le segment OA

Après cette course prédéterminée de la tige de commande 26, le clapet 24 ouvre à l'atmosphère la chambre arrière 14 du servomoteur 100, et une différence de pressions s'établit entre les deux chambres 12 et 14 du servomoteur. Cette différence de pressions engendre une force d'assistance qui fait avancer la jupe rigide 20 et le cylindre mobile 32.

La pression hydraulique dans le volume interne V du maître-cylindre 200 s'élève alors et s'établit, par circulation de fluide hydraulique à travers les ouvertures 36, dans le volume interne 35 du cylindre mobile 32, et s'exerce sur la section S du piston de réaction 34.

Dans un premier temps, la force engendrée par cette pression s'exerçant sur cette section S ne dépasse pas la précontrainte au repos du ressort 46, de sorte que le piston de réaction 34 reste immobile par rapport au cylindre mobile 32, et à distance de la tige de poussée 42, aucune réaction n'étant alors ressentie sur la pédale de frein. Cette première phase de fonctionnement est représentée par le segment AB de la courbe de la Figure 3. La longueur du segment AB est appelée le « saut » du servomoteur.

Le saut du servomoteur peut être réglé à toute valeur désirée en ajustant la précontrainte au repos du ressort 46. On peut prévoir par exemple, comme on l'a représenté sur les Figures 1 et 2, que la bague 40 soit filetée et vissée dans le cylindre mobile 32 auquel elle transmet une partie au moins de la force d'assistance s'exerçant sur la jupe 20 en appui contre elle.

Le vissage de la bague 40 dans le cylindre mobile 32 a ainsi pour effet de comprimer le ressort 46, donc d'augmenter la précontrainte qu'exerce ce dernier sur le piston de réaction 34 en direction du maître-cylindre, c'est-à-dire encore d'augmenter la valeur du saut.

Pour compenser la réduction de longueur résultant du vissage de la bague 40 dans le cylindre mobile 32, cette bague est par exemple réalisée en deux parties vissées l'une dans l'autre de manière à présenter une longueur totale réglable

On peut également prévoir que la tige de poussée 42 soit elle-même réalisée en deux parties vissées l'une dans l'autre de manière à présenter une longueur totale réglable, le réglage de cette longueur permettant notamment de modifier l'ouverture du clapet à l'apparition du saut, quelle que soit la valeur donnée à ce dernier par vissage de la bague 40 dans le cylindre mobile 32.

Dans une deuxième phase de fonctionnement, la pression hydraulique augmente dans les volumes V et 35, et atteint une valeur prédéterminée, pour laquelle, s'appliquant sur la section S, elle devient suffisante pour vaincre la précontrainte au repos du ressort 46. Le piston de réaction 34 se déplace alors vers l'arrière et vient au contact de la tige de poussée 42, comme illustré par le point B de la courbe de la Figure 3.

Le piston de réaction 34 exerce alors sur la tige de poussée 42, et sur la pédale de frein, une force de réaction, dépendant de la force d'assistance, s'opposant à la force d'entrée, et permettant donc le contrôle de la première force par la seconde, comme on l'a représenté par le segment BC sur la courbe de la Figure 3. Le piston de réaction 34 constitue alors un piston de réaction, soumis à la pression hydraulique régnant dans la chambre de réaction constituée par le volume intérieur 35 du cylindre mobile 32.

La pente de ce segment BC, égale au rapport de la pression de sortie sur la force d'entrée, représente le rapport d'assistance du dispositif de freinage. Ce rapport d'assistance est aussi égal au rapport de la section Si du cylindre mobile 32 sur la section S du piston de réaction 34.

La force d'assistance atteint son maximum lorsque la pression dans la chambre arrière du servomoteur atteint la pression atmosphérique, et ne peut donc plus augmenter. On atteint alors le phénomène connu sous le nom de saturation, et représenté par le segment CD sur la courbe de la Figure 3.

Dans toutes ces phases de fonctionnement, on voit notamment que, mise à part la course du plongeur 28 nécessaire pour actionner le clapet 24 et faire varier la pression dans la chambre arrière 14, et correspondant au segment OA de la courbe de la Figure 3, le plongeur 28 et la tige de poussée 42 se déplacent avec la cloison mobile 16.

Le fonctionnement du dispositif de freinage que l'on vient de décrire se reproduit à chaque action de freinage, quelle que soit la vitesse d'application de la force d'entrée sur la tige de commande 26, c'est à dire aussi bien pour un freinage normal où une faible décélération du véhicule est désirée, que pour un freinage d'urgence où le conducteur éprouve le besoin d'arrêter immédiatement son véhicule.

Dans ce dernier cas, il est bien sur désirable d'obtenir rapidement un effort de freinage important, c'est à dire une pression élevée dans le circuit hydraulique de freinage. La présente invention permet d'atteindre ce résultat, c'est à dire obtenir immédiatement une pression de freinage élevée en cas de freinage d'urgence, par des moyens simples, efficaces et dont le temps de réponse est minimal.

Comme on le voit mieux sur la Figure 2, le piston de réaction 34 est lui-même composite. Il comporte une première partie 50, en butée vers l'avant, en position de repos, sur le cylindre mobile 32 sous l'effet de la sollicitation du ressort 46. Il comporte également une deuxième partie 52, susceptible de coulisser à l'intérieur de la première partie 50, de façon étanche grâce à un joint annulaire 63.

Le cylindre mobile 32 comporte également un troisième piston 82 susceptible de coulisser de façon étanche dans un alésage axial étagé 84-85 formé à l'avant du cylindre mobile 32, la portion 84 de plus petit diamètre étant située en avant de la portion 85 de plus grand diamètre. L'étanchéité du coulissement est obtenue grâce à des joints 87 et 89. Le volume 91 situé entre les joints 87 et 89, le troisième piston 82 et les alésages 84 et 85 est relié au réservoir de fluide de freinage sous basse pression, par exemple par l'intermédiaire d'une canalisation 93, de façon à permettre les mouvements de ce troisième piston. En variante, on peut également prévoir que ce volume 91 soit fermé et isolé, et rempli d'un fluide compressible, tel que l'air ou un gaz inerte tel que l'azote, pour permettre également les mouvements de ce troisième piston.

Le troisième piston 82 est sollicité vers l'arrière en position de repos par un ressort 86 de façon à venir en buté arrière, au repos, sur la première partie 50, par l'intermédiaire d'une nervure radiale 88. Le troisième piston est formé avec une ouverture centrale traversante 90, et un ressort 92 est disposé entre cette nervure radiale 88 et la deuxième partie 52. La deuxième partie 52 est de plus formée avec un siège 94, par exemple en caoutchouc, susceptible de coopérer avec le troisième piston 82 pour obturer l'ouverture centrale 90. On pourra avantageusement former un bourrelet 95 sur la face arrière du troisième piston 82, au bord de l'ouverture 90, pour parfaire cette obturation.

La précontrainte au repos du ressort 86 est inférieure à celle du ressort 46, et la somme des précontraintes au repos des ressorts 86 et 92 est inférieure à celle du ressort 46, de façon à ce que la deuxième partie 52 soit, au repos, en butée avant sur le cylindre mobile 32. De plus, le ressort 92 a une raideur inférieure à celle du ressort 86.

En fonctionnement, lorsqu'un effort est appliqué sur la pédale de frein pour une action de freinage où seul un ralentissement normal du véhicule est désiré, l'ensemble que l'on vient de décrire fonctionne comme on l'a expliqué plus haut. En effet, la pression régnant dans le volume intérieur V du maître-cylindre est communiquée à la chambre de réaction 35 par l'ouverture 90, pour s'exercer sur la section S de la première partie 50, et la faire reculer en même temps que la deuxième partie 52 grâce à l'étanchéité du joint annulaire 63, jusqu'à ce que la deuxième partie 52 vienne au contact de la tige de poussée 42.

Simultanément, la pression de fluide de freinage s'exerce sur les deux extrémités du troisième piston 82. De par sa forme étagée, et grâce au fait que le volume 91 est relié au réservoir, le troisième piston 82 se comporte comme un piston différentiel. Il est soumis à une force dirigée vers l'avant, et se déplace d'une distance proportionnelle à la pression régnant dans le maître-cylindre, et fonction de la différence entre les sections des portions 85 et 84 de l'alésage étagé, et de la précontrainte au repos du ressort 86.

Lorsque le conducteur relâche son effort sur la tige de commande 26, il en résulte une baisse de la pression dans la chambre arrière 14 du servomoteur, et donc une diminution de la force d'assistance. La cloison mobile 16 est donc rappelée en arrière par le ressort 25, et entraîne avec elle le cylindre mobile 32. La pression dans le volume intérieur V du maître-cylindre peut alors s'abaisser, de même que dans l'ouverture 90 et dans la chambre de réaction 35. En effet, celle-ci communique en permanence avec le volume intérieur V du maître-cylindre par l'intermédiaire de l'ouverture 90, puisque le piston différentiel 82 s'était déplacé vers l'avant. Ce dernier va reprendre progressivement sa position de repos au cours de la baisse de pression dans le maître-cylindre

La courbe caractéristique de fonctionnement du dispositif de freinage est alors conforme à la courbe de la Figure 3, en passant par les points O, A, B, C et D, aussi bien lors de la montée en effort d'entrée que lors de la diminution de cet effort d'entrée.

Par contre, lors d'une action de freinage dans des conditions d'urgence, c'est à dire quand l'effort d'entrée sur la pédale de frein augmente très rapidement pour atteindre une valeur très élevée, le plongeur 28 et la tige de poussée 42 avancent très rapidement, et en particulier ils avancent par rapport à la jupe rigide 20, la différence de pressions entre les chambres avant et arrière n'ayant pas eu le temps de s'établir et de mouvoir la cloison mobile 16. Ce phénomène a deux conséquences importantes.

D'une part, le mouvement supplémentaire vers l'avant du plongeur 28 provoque une ouverture plus importante du clapet 24, ce qui permet une montée en pression dans la chambre arrière 14 plus rapide.

D'autre part, et simultanément, la tige de poussée 42 vient au contact de la deuxième partie 52 et la fait coulisser vers l'avant dans l'alésage 62 de la première partie 50. Dans ce mouvement, le ressort 46 n'est pas comprimé et n'a alors pour seul effet que de maintenir la première partie 50 en appui sur l'épaulement radial 44. La raideur du ressort 86 étant supérieure à celle du ressort 92, ce dernier se comprime le premier et permet à la deuxième partie 52 de venir au contact du piston différentiel 82, ou plus exactement permet au siège 94 de venir au contact du bourrelet 95. A partir de ce moment, le ressort 86 va se comprimer à son tour.

Le mouvement vers l'avant de l'ensemble deuxième partie 52/piston différentiel 82 n'est pas limité puisque cet ensemble se déplace dans la chambre de réaction 35 qui a alors un volume constant, et que le volume 91 est relié au réservoir de fluide de freinage sous basse pression.

Dans ce mouvement, la communication entre le volume intérieur V du maître-cylindre et la chambre de réaction 35 est interrompue. Il s'ensuit que la pression hydraulique dans le volume V du maître-cylindre s'exerce sur le piston différentiel 82, sur sa section S₂ définie par la portion 84 de l'alésage étagé 84-85. Il en résulte donc que le rapport d'assistance dans cette condition de freinage d'urgence est égal au rapport de la section Si du cylindre mobile 32 sur la section S₂ du piston différentiel 82, alors en appui sur la deuxième partie 52 du piston de réaction 34 et sur laquelle la pression hydraulique s'exerce, et définie par la section de la portion d'alésage 84.

La section S₂ étant inférieure à la section S de la première partie 50, il en résulte alors que dans une condition de freinage d'urgence, le rapport d'assistance est supérieur à celui qu'on obtient dans une condition de freinage normal. Le fonctionnement du dispositif de freinage est alors représenté par le segment BE sur la courbe de la Figure 3.

On voit ainsi que pour un même effort d'entrée instantané F₁, on obtient une pression instantanée P₂ notablement supérieure à la pression instantanée P₁ obtenue dans des conditions de freinage normal. D'autre part, le rapport d'assistance étant supérieur, on atteint plus vite le phénomène de saturation, représenté par le point E.

On pourra librement choisir ce deuxième rapport d'assistance et lui donner toute valeur désirée, et en particulier une valeur élevée en choisissant pour les diamètres du bourrelet 95 et de l'ouverture 90 des valeurs faibles. L'ouverture 90 doit toutefois avoir un diamètre suffisant pour permettre la montée en pression hydraulique de la chambre de réaction 35 dans des conditions normales de fonctionnement, sans apporter de restriction dans la communication avec le volume V du maître-cylindre.

Lorsque le conducteur relâche son effort après une telle action de freinage d'urgence, le retour vers l'arrière de la tige de commande 26 a pour effet de mouvoir le plongeur 28 et le clapet 24 qui remet alors les chambres avant et arrière en communication l'une avec l'autre. Il en résulte alors un recul de la cloison mobile 16 et du cylindre mobile 32 sous l'effet du ressort 25, et une baisse de pression dans le volume intérieur V du maître-cylindre.

Simultanément, la tige de poussée 42 ayant reculé, le ressort 86 peut repousser le piston différentiel 82 et la deuxième partie 52 vers l'arrière. Cette phase de fonctionnement est représentée par les segments DE et EB sur la courbe de la Figure 3. Lorsque la nervure radiale 88 vient en butée sur la première partie 50, le point B de la courbe de la Figure 3 est atteint, et le ressort 92 repousse alors la deuxième partie 52 jusqu'à ce qu'elle vienne également en butée sur la première partie 50.

Les différentes pièces mobiles reprennent ainsi leur position de repos illustrée sur la Figure 2, et la chambre de réaction 35 est à nouveau en communication avec le volume intérieur du maître-cylindre.

On a donc bien réalisé, selon la présente invention, un dispositif de freinage assisté qui présente des caractéristiques de fonctionnement améliorées en cas de freinage d'urgence, puisqu'il présente alors un rapport d'assistance nettement supérieur à celui qu'il présente dans des conditions normales de fonctionnement. Ce changement de rapport d'assistance est obtenu automatiquement sans nécessiter de capteurs ni de circuit électronique complexe, par la simple exploitation du fait que, dans ces conditions extrêmes, le plongeur 28 et la tige de poussée 42 présentent un mouvement relatif par rapport à la jupe rigide 20. Pour chaque rapport d'assistance, la courbe caractéristique de fonctionnement est la même pour la phase d'actionnement et pour la phase de relâchement. Les moyens utilisés pour obtenir ces résultats sont relativement simples, et sont donc de coût réduit et de fonctionnement fiable en toutes circonstances, aussi bien dans des conditions normales de fonctionnement que dans des conditions d'urgence.

## Revendications

1. Dispositif de freinage assisté pour véhicule à moteur, comprenant d'une part un maître-cylindre (200) rempli d'un fluide de freinage et équipé d'un piston hydraulique principal (30) destiné à recevoir une force d'actionnement se composant d'une force d'entrée et d'une force d'assistance agissant toutes deux suivant une direction axiale, et d'autre part un servomoteur pneumatique d'assistance (100) susceptible d'être commandé par application de la force d'entrée sur une tige de commande (26) solidaire d'un plongeur (28) contrôlant l'ouverture d'un clapet à trois voies (24), pour exercer la force d'actionnement sur le piston hydraulique principal (30), le servomoteur comportant une enveloppe rigide (10) séparée de façon étanche en au moins deux chambres (12, 14) au moyen d'au moins une cloison mobile (16), susceptible d'être sollicitée par une différence de pression entre les deux chambres (12, 14) résultant de l'ouverture du clapet à trois voies (24) et d'entraîner un piston pneumatique (22), mobile par rapport à l'enveloppe (10), portant le clapet à trois voies (24) et contribuant au moins à transmettre la force d'assistance, le piston hydraulique principal (30) du maître cylindre (200) comportant lui-même un cylindre mobile (32), creux, communiquant avec le volume intérieur (V) du maître-cylindre, recevant une partie au moins de la force d'assistance, et à l'intérieur duquel coulisse, de façon étanche et suivant la direction axiale, un piston de réaction (34) susceptible de recevoir au moins la force d'entrée, des premiers moyens élastiques (46) exerçant une première force élastique entre le piston de réaction (34) et le cylindre mobile (32) et sollicitant le piston de réaction (34) en direction du maître-cylindre (200), au moins une ouverture (36) étant pratiquée dans le cylindre mobile (32) pour faire communiquer l'intérieur (35) de ce dernier avec l'intérieur (V) du maître-cylindre, le piston de réaction (34) comportant un moyen de clapet à deux voies (94, 95) normalement ouvert, susceptible d'interrompre la communication entre le volume intérieur (V) du maître-cylindre et l'intérieur (35) du cylindre mobile (32), le piston de réaction (34) étant composite, et comportant une première partie (50) en butée, en position de repos, contre le cylindre mobile (32) sous l'effet des premiers moyens élastiques (46), et une deuxième partie (52) susceptible de coulisser par rapport à la première partie (50), des deuxièmes moyens élastiques (46, 92) exerçant vers l'arrière une deuxième force élastique sur la deuxième partie (52) pour la solliciter en butée, en position de repos, contre la première partie (50), la deuxième partie (52) étant susceptible de coulisser de façon étanche dans la première partie (50), un troisième piston (82) étant susceptible de coulisser de façon étanche dans le cylindre mobile (32), le troisième piston (82) étant sollicité vers l'arrière par des troisièmes moyens élastiques (86) pour venir en butée, en position de repos, sur la première partie (50), les deuxièmes moyens élastiques (92) étant disposés entre la deuxième partie (52) et le troisième piston (82), le troisième piston (82) étant formé avec une ouverture centrale (90) faisant communiquer l'intérieur (35) du cylindre mobile (32) avec le volume intérieur du maître-cylindre (200), le moyen de clapet à deux voies (94, 95) étant formé par un siège (94) disposé sur la deuxième partie (52) ou sur la troisième partie (82), le troisième piston (82) étant étagé et coulisse de façon étanche dans un alésage étagé (84, 85) du cylindre mobile (32), le diamètre de la portion avant (84) de l'alésage étagé étant inférieur au diamètre de la portion arrière (85) de cet alésage.

2. Dispositif de freinage assisté selon la revendication 1, **caractérisé en ce que** la pression du fluide de freinage dans le volume intérieur (V) du maître-cylindre (200) s'applique sur une première section (S) du cylindre mobile creux (32) lorsque le moyen de clapet à deux voies (94, 95) est ouvert, et sur une deuxième section (S₂) du piston de réaction (34), inférieure à la première section (S), lorsque le moyen de clapet à deux voies (94, 95) est fermé.

3. Dispositif de freinage assisté selon la revendication 1, **caractérisé en ce que** le plongeur (28) est solidaire d'une tige de poussée (42) actionnant le moyen de clapet à deux voies (56, 58, 66, 74, 94) dans le sens de la fermeture lors d'un mouvement relatif entre le plongeur (28) et la cloison mobile (16).

4. Dispositif de freinage assisté selon la revendication 1, **caractérisé en ce que** le troisième piston (82) et l'alésage étagé (84, 85) définissent un volume (91) soumis à une pression constante.

5. Dispositif de freinage assisté selon la revendication 4, **caractérisé en ce que** le volume (91) défini par le troisième piston (82) et l'alésage étagé (84, 85) est relié en permanence à un réservoir de fluide de freinage sous basse pression.

6. Dispositif de freinage assisté selon la revendication 1, **caractérisé en ce que** le troisième piston (82) et l'alésage étagé (84, 85) définissent un volume (91) rempli d'un fluide compressible.

## Patentansprüche

1. Bremskraftverstärker für Motorfahrzeuge, der einerseits einen Hauptzylinder (200) aufweist, der mit einer Bremsflüssigkeit gefüllt und mit einem hydraulischen Hauptkolben (30) ausgestattet ist, der dazu vorgesehen ist, eine Betätigungskraft aufzunehmen, die sich aus einer Eingangskraft und einer Hilfskraft zusammensetzt, wobei beide entlang einer axialen Richtung wirken, und der andererseits einen pneumatischen Bremskraftverstärker (100) aufweist, der durch die auf eine Steuerstange (26) wirkende Eingangskraft betätigt werden kann, wobei die Steuerstange (26) mit einem Tauchkolben (28) fest verbunden ist, der die Öffnung eines Dreiwege-Ventils (24) steuert, um die Betätigungskraft auf den hydraulischen Hauptkolben (30) auszuüben, wobei der Bremskraftverstärker ein starres Gehäuse (10) aufweist, das in dichter Weise in wenigstens zwei Kammern (12, 14) mit Hilfe von wenigstens einer beweglichen Trennwand (16) geteilt ist, die durch das Öffnen des Dreiwege-Ventils (24) mit einem Druckunterschied zwischen den beiden Kammern (12, 14) beaufschlagt werden und einen pneumatischen Kolben (22) mitnehmen kann, der bezüglich des Gehäuses (10) beweglich ist, das Dreiwege-Ventil (24) trägt und wenigstens zur Übertragung der Hilfskraft beiträgt, wobei der hydraulische Hauptkolben (30) des Hauptzylinders (200) selbst einen beweglichen Hohlzylinder (32) umfaßt, der mit dem inneren Volumen (V) des Hauptzylinders verbunden ist, wenigstens einen Teil der Hilfskraft aufnimmt und in dessen Innerem auf dichte Weise und entlang einer axialen Richtung ein Reaktionskolben (34) gleitet, der wenigstens die Eingangskraft aufnehmen kann, wobei erste elastische Mittel (46) eine erste elastische Kraft zwischen dem Reaktionskolben (34) und dem beweglichen Zylinder (32) ausüben und den Reaktionskolben (34) in Richtung des Hauptzylinders (200) beaufschlagen, wobei wenigstens eine Öffnung (36) in dem beweglichen Zylinder (32) ausgebildet ist, um dessen Innenraum (35) mit dem inneren Volumen (V) des Hauptzylinders zu verbinden, wobei der Reaktionskolben (34) eine Zweiwegeventil-Anordnung (94, 95) aufweist, die normalerweise geöffnet ist und die Verbindung zwischen dem inneren Volumen (V) des Hauptzylinders und dem Inneren (35) des beweglichen Zylinders (32) unterbrechen kann, wobei der Reaktionskolben (34) zusammengesetzt ist und ein erstes Teil (50) aufweist, das in Ruhestellung an dem beweglichen Zylinder (32) unter der Wirkung von ersten elastischen Mitteln (46) anliegt und ein zweites Teil (52) aufweist, das bezüglich des ersten Teils (50) gleiten kann, wobei die zweiten elastischen Mittel (46, 92) eine zweite elastische Kraft nach hinten auf das zweite Teil (52) ausüben, um es in Ruhestellung gegen das erste Teil (50) in Anschlag zu bringen, wobei das zweite Teil (52) auf dichte Weise in dem ersten Teil (50) gleiten kann, wobei ein dritter Kolben (82) auf dichte Weise in dem beweglichen Zylinder (32) gleiten kann, wobei der dritte Kolben (82) durch dritte elastische Mittel (86) nach hinten beaufschlagt ist, um sich in Ruhestellung gegen das erste Teil (50) abzustützen, wobei die zweiten elastischen Mittel (92) zwischen dem zweiten Teil (52) und dem dritten Kolben (82) angeordnet sind, wobei der dritte Kolben (82) mit einer mittleren Öffnung (90) ausgebildet ist, die den Innenraum (35) des beweglichen Zylinders (32) mit dem inneren Volumen des Hauptzylinders (200) verbindet, wobei die Zweiwegeventil-Anordnung (94, 95) durch einen Ventilsitz (94) gebildet ist, der auf dem zweiten Teil (52) oder dem dritten Teil (82) angeordnet ist, wobei der dritte Kolben (82) abgestuft ist und auf dichte Weise in einer abgestuften Bohrung (84, 85) des beweglichen Zylinders (32) gleitet, wobei der Durchmesser des vorderen Bereichs (84) der abgestuften Bohrung kleiner ist als der Durchmesser des hinteren Bereichs (85) dieser Bohrung.

2. Bremskraftverstärker nach Anspruch 1, **dadurch gekennzeichnet, daß** der Druck der Bremsflüssigkeit in dem inneren Volumen (V) des Hauptzylinders (200) auf eine erste Querschnittsfläche (S) des beweglichen Hohlzylinders (32) wirkt, wenn die Zweiwegeventil-Anordnung (94, 95) geöffnet ist, und auf eine zweite Querschnittsfläche (S₂) des Reaktionskolbens (34) wirkt, die kleiner ist als die erste Querschnittsfläche (S), wenn die Zweiwegeventil-Anordnung (94, 95) geschlossen ist.

3. Bremskraftverstärker nach Anspruch 1, **dadurch gekennzeichnet, daß** der Tauchkolben (28) fest mit einer Schubstange (42) verbunden ist, welche die Zweiwegeventil-Anordnung (56, 58, 66, 74, 94) bei einer Relativbewegung zwischen dem Tauchkolben (28) und der beweglichen Trennwand (16) in Schließrichtung betätigt.

4. Bremskraftverstärker nach Anspruch 1, **dadurch gekennzeichnet, daß** der dritte Kolben (82) und die abgestufte Bohrung (84, 85) ein Volumen (91) definieren, das einem konstanten Druck ausgesetzt ist.

5. Bremskraftverstärker nach Anspruch 4, **dadurch gekennzeichnet, daß** das Volumen (91), das durch den dritten Kolben (82) und die abgestufte Bohrung (84, 85) definiert ist, stets mit einem Reservoir an Bremsflüssigkeit unter niederem Druck verbunden ist.

6. Bremskraftverstärker nach Anspruch 1, **dadurch gekennzeichnet, daß** der dritte Kolben (82) und die abgestufte Bohrung (84, 85) ein Volumen (91) definieren, das mit einem kompressiblen Fluid gefüllt ist.

## Claims

1. Boosted braking device for a motor vehicle, comprising on the one hand a master cylinder (200) filled with a brake fluid and equipped with a main hydraulic piston (30) intended to receive an actuating force composed or an input force and of a boost force both acting in an axial direction, and on the other hand a pneumatic booster (100) which can be operated by applying the input force to an operating rod (26) secured to a plunger (28) controlling the opening of a three-way valve (24), so as to exert the actuating force on the main hydraulic piston (30), the booster including a rigid casing (10) divided in leaktight fashion into at least two chambers (12, 14) by means of at least one moving partition (16) which can be acted upon by a difference in pressure between the two chambers (12, 14) resulting from the opening of the three-way valve (24) and of driving along a pneumatic piston (22) which can move with respect to the casing (10), bearing the three-way valve (24) and contributing at least to transmitting the boost force, the main hydraulic piston (30) of the master cylinder (200) itself including a hollow moving cylinder (32) communicating with the interior volume (V) of the master cylinder, receiving at least part of the boost force, and inside which there slides, in leaktight fashion and in the axial direction, a reaction piston (34) capable of receiving at least the input force, first elastic means (46) exerting a first elastic force between the reaction piston (34) and the moving cylinder (32) and urging the reaction piston (34) in the direction of the master cylinder (200), at least one opening (36) being made in the moving cylinder (32) in order to make the interior (35) of the latter communicate with the interior (V) of the master cylinder, the reaction piston (34) including a two-way valve means (94, 95) which is normally open, capable of interrupting the communication between the interior volume (V) of the master cylinder and the interior (35) of the moving cylinder (32), the reaction piston (34) being composite and including a first part (50) which, in the position of rest, is in abutment against the moving cylinder (32) under the effect of the first elastic means (46), and a second part (52) capable of sliding with respect to the first part (50), second elastic means (46, 92) exerting a second elastic force backwards on the second part (52) in order to urge it into abutment, in the position of rest, against the first part (50), the second part (52) being capable of sliding in leaktight fashion in the first part (50), a third piston (82) being capable of sliding in leaktight fashion inside the moving cylinder (32), the third piston (82) being urged backwards by third elastic means (82) so that in the position of rest it comes into abutment on the first part (50), the second elastic means (92) being arranged between the second part (52) and the third piston (82), the third piston (82) being formed with a central opening (90) making the interior (35) of the moving cylinder (32) communicate with the interior volume of the master cylinder (200), the two-way valve means (94, 95) being formed by a seat (94) arranged on the second part (52) or on the third part (82), the third piston (82) being stepped and slides in leaktight fashion in a stepped bore (84, 85) of the moving cylinder (32), the diameter of the front portion (84) of the stepped bore being smaller than the diameter of the rear portion (84) of this bore.

2. Boosted braking device according to Claim 1, **characterized in that** the pressure of the brake fluid in the interior volume (V) of the master cylinder (200) is applied to a first cross section (S) of the hollow moving cylinder (32) when the two-way valve means (94, 95) is open, and to a second cross section (S₂) of the reaction piston (34), this cross section being smaller than the first cross section (S), when the two-way valve means (94, 95) is closed.

3. Boosted braking device according to Claim 1, **characterized in that** the plunger (28) is secured to a push rod (42) actuating the two-way valve means (56, 58, 66, 74, 94) in the direction of closure upon a relative movement between the plunger (28) and the moving partition (16).

4. Boosted braking device according to Claim 1, **characterized in that** the third piston (82) and the stepped bore (84, 85) define a volume (91) which is subject to a constant pressure.

5. Boosted braking device according to Claim 4, **characterized in that** the volume (91) defined by the third piston (82) and the stepped bore (84, 85) is permanently connected to a brake fluid reservoir at low pressure.

6. Boosted braking device according to Claim 1, **characterized in that** the third piston (82) and the stepped bore (84, 85) define a volume (91) filled with a compressible fluid.
